(19) Europäisches Patentamt
European Patent Office
Office européen des brevets

(11) **EP 4 599 604 B1**

(12) **EUROPEAN PATENT SPECIFICATION**

(45) Date of publication and mention
of the grant of the patent:
**29.04.2026 Bulletin 2026/18**

(21) Application number: **24791052.4**

(22) Date of filing: **15.09.2024**

(51) International Patent Classification (IPC):
**H04R 25/00** (2006.01)        **G02C 11/06** (2006.01)

(52) Cooperative Patent Classification (CPC):
**H04R 25/407; G02C 11/06;** G10L 2021/02166;
H04R 2201/403; H04R 2225/43; H04R 2430/20

(86) International application number:
**PCT/IB2024/058971**

(87) International publication number:
**WO 2025/068818 (03.04.2025 Gazette 2025/14)**

(54) **HEARING AID WITH OWN-VOICE MITIGATION**

HÖRGERÄT MIT EIGENSTIMMENABSCHWÄCHUNG

AIDE AUDITIVE AVEC ATTÉNUATION DE LA VOIX PROPRE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **28.09.2023 US 202318476369**

(43) Date of publication of application:
**13.08.2025 Bulletin 2025/33**

(73) Proprietor: **Nuance Hearing Ltd.
6971924 Tel Aviv (IL)**

(72) Inventor: **HERTZBERG, Yehonatan
6083205 Shoham (IL)**

(74) Representative: **Synergy IP Group AG
Leonhardsgraben 52
Postfach
4001 Basel (CH)**

(56) References cited:
**CA-A1- 2 297 344        US-A1- 2019 394 586
US-A1- 2021 345 047**

## Description

### FIELD

The present invention relates generally to hearing aids, and particularly to devices and methods for improving directional hearing.

### BACKGROUND

Speech understanding in noisy environments is a significant problem for the hearing-impaired. Hearing impairment is usually accompanied by a reduced time resolution of the sensorial system in addition to a gain loss. These characteristics further reduce the ability of the hearing-impaired to filter the target source from the background noise and particularly to understand speech in noisy environments.

Some newer hearing aids offer a directional hearing mode to improve speech intelligibility in noisy environments. This mode makes use of an array of microphones and applies beamforming technology to combine multiple microphone inputs into a single, directional audio output channel. The output channel has spatial characteristics that increase the contribution of acoustic waves arriving from the target direction relative to those of the acoustic waves from other directions.

For example, PCT International Publication WO 2017/158507 describes a hearing aid apparatus, including a case, which is configured to be physically fixed to a mobile telephone. An array of microphones are spaced apart within the case and are configured to produce electrical signals in response to acoustical inputs to the microphones. An interface is fixed within the case, along with processing circuitry, which is coupled to receive and process the electrical signals from the microphones so as to generate a combined signal for output via the interface.

As another example, PCT International Publication WO 2021/074818 describes an apparatus for hearing assistance, which includes a spectacle frame, including a front piece and temples, with one or more microphones mounted at respective first locations on the front piece and configured to output electrical signals in response to first acoustic waves that are incident on the microphones. A speaker mounted at a second location on one of the temples outputs second acoustic waves. Processing circuitry generates a drive signal for the speaker by processing the electrical signals output by the microphones so as to cause the speaker to reproduce selected sounds occurring in the first acoustic waves with a delay that is equal within 20% to a transit time of the first acoustic waves from the first location to the second location, thereby engendering constructive interference between the first and second acoustic waves.

US 2019394586 A1, US 2021345047 A1 and CA 2297344 A1 disclose hearing assistance devices with own voice detection and corresponding tuning of a beamformer.

## SUMMARY

Embodiments of the present invention that are described hereinbelow provide improved devices and methods for hearing assistance.

The present invention will be more fully understood from the following detailed description of the embodiments thereof, taken together with the drawings in which:

## BRIEF DESCRIPTION OF THE DRAWINGS

Fig. 1 is a schematic pictorial illustration showing a hearing assistance device based on a spectacle frame, in accordance with an embodiment of the invention;
Fig. 2 is a block diagram that schematically shows details of a hearing assistance device, in accordance with an embodiment of the invention; and
Fig. 3 is a flow chart that schematically illustrates a method for operation of a hearing assistance device, in accordance with an embodiment of the invention.

## DETAILED DESCRIPTION

OVERVIEW

Despite the need for directional hearing assistance and the theoretical benefits of microphone arrays in this regard, in practice the directional performance of hearing aids falls far short of that achieved by natural hearing. In general, good directional hearing assistance requires a relatively large number of microphones, spaced well apart, in a design that is unobtrusive while enabling the user to aim the directional response of the hearing aid easily toward a point of interest, such as toward a conversation partner in noisy environment. Processing circuitry applies a beamforming filter to the signals output by the microphones in response to incident acoustic waves to generate an audio output that emphasizes sounds that impinge on the microphone array within an angular range around the direction of interest while suppressing background noise. The audio output should reproduce the natural hearing experience as nearly as possible while minimizing bothersome artifacts.

One of these artifacts is the user's own voice. The proximity of the user's mouth to the microphones causes the processing circuitry to capture and amplify the user's voice together with the sounds received from the direction of interest in the environment. Users find the amplified sound of their own voice to be unnatural and disturbing. In some cases, amplification of the user's voice may mask sounds from the environment that the user wishes to hear.

Embodiments of the present invention that are described herein address this problem using a novel beamforming filter, which emphasizes sounds that impinge on an array of microphones within a selected angular range while suppressing sounds that are spoken by the user. In the disclosed embodiments, an array of microphones, mounted in proximity to the head of a user, outputs electrical signals in response to incoming acoustic waves that are incident on the microphones. A speaker, mounted in proximity to the user's ear, outputs acoustic waves in response to a drive signal. Processing circuitry generates the drive signal by amplifying and filtering the electrical signals using the beamforming filter.

The processing circuitry detects that the user is speaking and applies the beamforming filter to suppress the sounds spoken by the user in response to such detection. For this purpose, for example, the processing circuitry applies two different beamforming filters: one that suppresses the sounds spoken by the user and another that does not. Both filters emphasize sounds within the selected angular range, but the filter that does not suppress sounds spoken by the user typically gives superior directivity in the beamforming pattern, as well as reduced white noise gain relative to the filter that suppresses the user's own voice. Therefore, the filter that does not suppress sounds spoken by the user is preferred for use as long as the user is not actually speaking. The processor applies the beamforming filter that suppresses the user's own voice upon detecting that the user is speaking. The processing circuitry detects which of the beamforming filters should be used at any given time by computing and comparing the relative power levels output by the beamforming filters.

In some embodiments, the microphones and speaker are mounted on a frame that is mounted on the user's head. In the embodiments that are described below, the microphones and speakers are mounted on a spectacle frame. To mitigate the effect of the user's own voice, the processing circuitry applies a beamforming filter that suppresses sounds that originate from a location below the spectacle frame. Alternatively, the microphones and speaker can be mounted on other sorts of frames, such as a Virtual Reality (VR) or Augmented Reality (AR) headset, or in other sorts of mounting arrangements.

SYSTEM DESCRIPTION

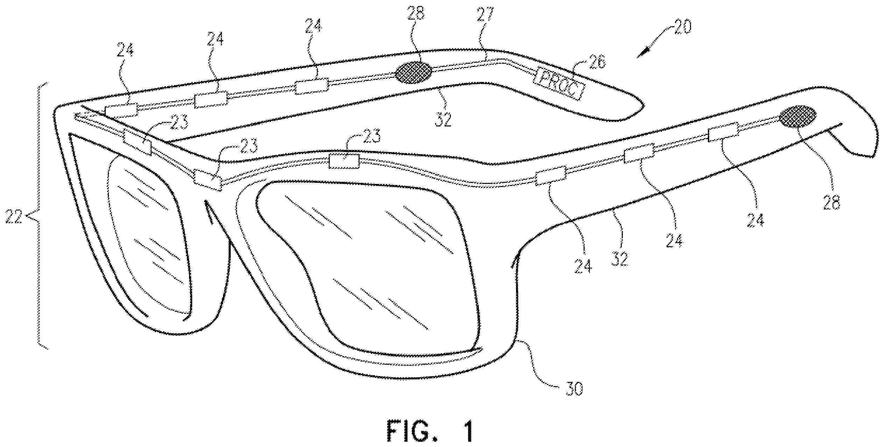

Fig. 1 is a schematic pictorial illustration of a hearing assistance device 20 that is integrated into a spectacle frame 22, in accordance with another embodiment of the invention. An array of microphones 23, 24 are mounted at respective locations on spectacle frame 22 and output electrical signals in response to acoustic waves that are incident on the microphones. In the pictured example, microphones 23 are mounted on a front piece 30 of frame 22, while microphones 24 are mounted on temples 32, which are connected to respective edges of front piece 30. Although the extensive array of microphones 23 and 24 that is shown in Fig. 1 is useful in some applications of the present invention, the principles of signal processing and hearing assistance that are described herein may alternatively be applied, *mutatis mutandis*, using smaller numbers of microphones. For example, these principles may be applied using an array of microphones 23 on front piece 30, as well as in devices using other microphone mounting arrangements, not necessarily spectacle-based.

Processing circuitry 26 is fixed within or otherwise connected to spectacle frame 22 and is coupled by electrical wiring 27, such as traces on a flexible printed circuit, to receive the electrical signals output from microphones 23, 24. Although processing circuitry 26 is shown in Fig. 1, for the sake of simplicity, at a certain location in temple 32, some or all of the processing circuitry may alternatively be located in front piece 30 or in a unit connected externally to frame 22. Processing circuitry 26 mixes the signals from the microphones so as to generate an audio output with a certain directional response, for example by applying beamforming functions so as to emphasize the sounds that originate within a selected angular range while suppressing background sounds originating outside this range. Typically, although not necessarily, the directional response is aligned with the angular orientation of frame 22.

In addition, processing circuitry 26 detects when the user is speaking and applies a beamforming function that suppresses sounds spoken by the user, while emphasizing the sounds that impinge on the array of microphones within a selected angular range. These signal processing functions of circuitry 26 are described in greater detail hereinbelow.

Processing circuitry 26 conveys the audio output to the user's ear via any suitable sort of interface and speaker. In the pictured embodiment, the audio output is created by a drive signal for driving one or more audio speakers 28, which are mounted on temples 32, typically in proximity to the user's ears. Although only a single speaker 28 is shown on each temple 32 in Fig. 1, device 20 may alternatively comprise only a single speaker on one of temples 32, or it may comprise two or more speakers mounted on one or both of temples 32. In this latter case, processing circuitry 26 may apply a beamforming function in the drive signals so as to direct the acoustic waves from the speakers toward the user's ears. Alternatively, the drive signals may be conveyed to speakers that are inserted into the ears or may be transmitted over a wireless connection, for example as a magnetic signal, to a telecoil in a hearing aid (not shown) of a user who is wearing the spectacle frame.

SIGNAL PROCESSING

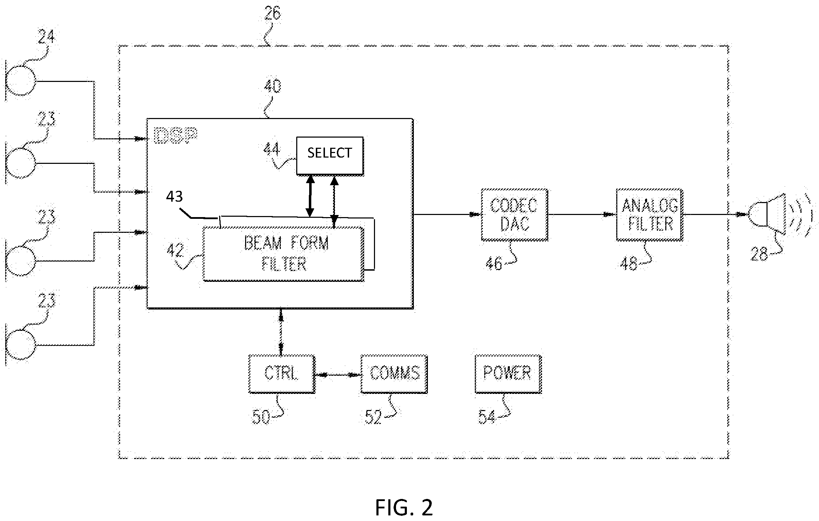

Fig. 2 is a block diagram that schematically shows details of processing circuitry 26 in hearing assistance device 20, in accordance with an embodiment of the invention. Processing circuitry 26 can be implemented in a single integrated circuit chip or alternatively, the functions of processing circuitry 26 may be distributed among multiple chips, which may be located within or outside spectacle frame 22. Although one particular implementation is shown in Fig. 2, processing circuitry 26 may alternatively comprise any suitable combination of analog and digital hardware circuits, along with suitable interfaces for receiving the electrical signals output by microphones 23, 24 and outputting drive signals to speakers 28.

In the present embodiment, microphones 23, 24 comprise integral analog/digital converters, which output digital audio signals to processing circuitry 26. Alternatively, processing circuitry 26 may comprise an analog/-digital converter for converting analog outputs of the microphones to digital form. Processing circuitry 26 typically comprises suitable programmable logic components 40, such as a digital signal processor (DSP) or a gate array, which implement the necessary filtering and mixing functions to generate and output a drive signal for speaker 28 in digital form.

These filtering and mixing functions typically include application of two beamforming filters 42, 43 with coefficients chosen to create the desired directional responses. Specifically, the coefficients of filter 42 are calculated to emphasize sounds that impinge on frame 22 (and hence on microphones 23, 24) within a selected angular range; while the coefficients of filter 43 are calculated to emphasize sounds that impinge on frame 22 within this selected angular range while suppressing sounds spoken by the user of device 20, which originate from a location below frame 22. Details of filters that may be used for these purposes are described further hereinbelow.

Alternatively or additionally, processing circuitry 26 may comprise a neural network (not shown), which is trained to determine and apply the coefficients to be used in filters 42 and 43. Further alternatively or additionally, processing circuitry 26 comprises a microprocessor, which is programmed in software or firmware to carry out at least some of the functions that are described herein.

Processing circuitry 26 may apply any suitable beamforming functions that are known in the art, in either the time domain or the frequency domain, in implementing filters 42, 43. Beamforming algorithms that may be used in this context are described, for example, in the above-mentioned PCT International Publication WO 2017/158507 (particularly pages 10-11) and in U.S. Patent 10,567,888 (particularly in col. 9).

In one embodiment, processing circuitry 26 applies a Minimum Variance Distortionless Response (MVDR) beamforming algorithm in deriving the coefficients of beamforming filters 42 and 43. This sort of algorithm is advantageous in achieving fine spatial resolution and discriminating between sounds originating from the direction of interest and sounds originating from the user's own speech. The MVDR algorithm maximizes the signal-to-noise ratio (SNR) of the audio output by minimizing the average energy (while keeping the target distortion small). The algorithm can be implemented in frequency space by calculating a vector of complex weights $F(\omega)$ for the output signal from each microphone at each frequency as expressed by the following formula:

$$F(\omega) = \frac{W^H(\omega)S_{zz}^{-1}(\omega)}{W^H(\omega)S_{zz}^{-1}(\omega)W(\omega)}$$

In this formula, $W(\omega)$ is the propagation delay vector between microphones 23, representing the desired response of the beamforming filter as a function of angle and frequency; and $S_{zz}(\omega)$ is the cross-spectral density matrix, representing a covariance of the acoustic signals in the time-frequency domain. To compute the coefficients of filter 42, $S_{zz}(\omega)$ is measured or calculated for isotropic far-field noise. To compute the coefficients of filter 43, the cross-spectral density matrix for the user's own voice is added to the far-field noise.

In an alternative embodiment, processing circuitry 26 applies a Linearly Constrained Minimum Variance (LCMV) algorithm in deriving the coefficients of beamforming filters 42 and 43. LCMV beamforming causes the filters to pass signals from a desired direction with a specified gain and phase delay, while minimizing power from interfering signals and noise from all other directions. An additional constraint is imposed in computing filter 43 to specifically nullify output power coming from the direction of the user's mouth.

In some embodiments, processing circuitry 26 comprises selection logic 44, which selects the beamforming filter to that is to be applied at any given time. Selection logic 44 chooses the beamforming filter based on whether or not the user is speaking. The selection decision may be based on the outputs of beamforming filters 42 and 43 themselves. For this purpose, processing circuitry 26 applies both of beamforming filters 42 and 43 to the electrical signals output by microphones 23, 24 and computes respective power levels $P_1$ and $P_2$ output by beamforming filters 42 and 43, respectively. Selection logic 44 compares the power levels, for example by application of a threshold to the ratio of the power levels. As long as $P_1/P_2$ is less than the threshold, selection logic 44 chooses filter 42. When $P_1/P_2$ exceeds the threshold, selection logic 44 chooses filter 43. The threshold may be preset, or it may alternatively be adjusted adaptively and/or according to user preferences.

An audio output circuit 46, for example comprising a suitable codec and digital/analog converter, converts the digital drive signal output from filters 42 and 43 to analog form. An analog filter 48 performs further filtering and analog amplification functions so as to optimize the analog drive signal to speaker 28.

A control circuit 50, such as an embedded microcontroller, controls the programmable functions and parameters of processing circuitry 26, possibly including selection logic 44. A communication interface 52, for example a Bluetooth® or other wireless interface, enables the user and/or an audiology professional to set and adjust these parameters as desired. A power circuit 54, such as a battery inserted into temple 32, provides electrical power to the other components of the processing circuitry.

## METHOD OF OPERATION

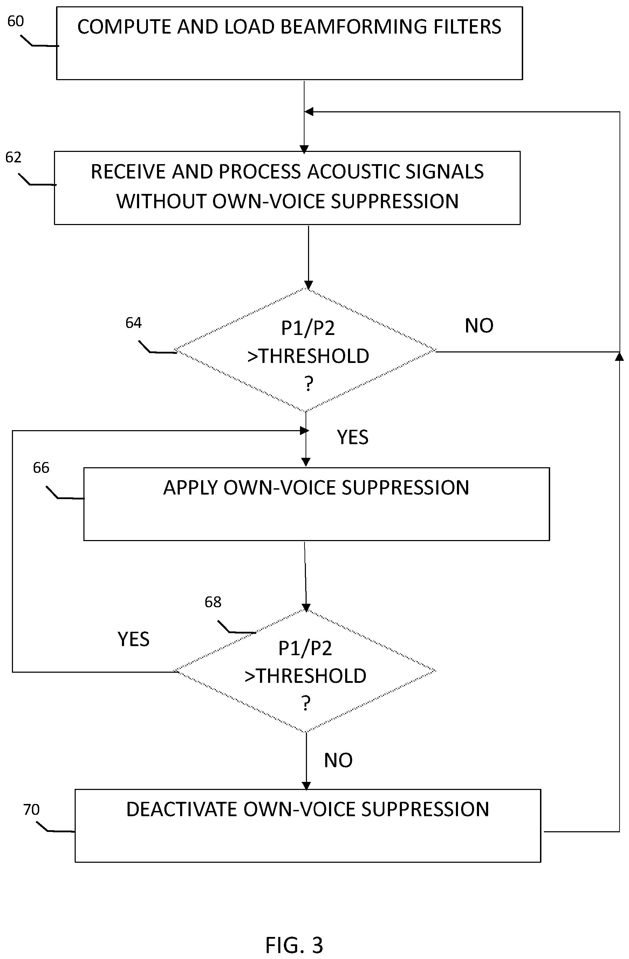

Fig. 3 is a flow chart that schematically illustrates a method for operation of a hearing assistance device with own-voice suppression, in accordance with an embodiment of the invention. The method is described hereinbelow, for the sake of concreteness and clarity, with reference to the components of device 20, as described above. Alternatively, the principles of this method may be applied in other devices and systems with suitable microphone arrays and signal processing capabilities.

In preparation for real-time application of the method, beamforming filters 42 and 43 are computed and loaded into device 20, at a filter computation step 60. The filters may be predefined and loaded at the time of manufacture of device 20, based on standardized spatial response parameters. Alternatively or additionally, the filter coefficients may be optimized for the user, taking into account parameters such as the user's physiology, hearing deficiency, and subjective preferences.

Initially, when device 20 is turned on, selection logic 44 chooses filter 42, so that acoustic signals from microphones 23, 24 are processed without own-voice suppression, at a standard beamforming step 62. Periodically, processing circuitry 26 applies both beamforming filters 42 and 43 to the electrical signals output by microphones 23, 24 and compares the respective power levels $P_1$ and $P_2$ that are output by beamforming filters 42 and 43, at a power comparison step 64. As long as the ratio $P_1/P_2$ remains less than the applicable threshold, selection logic 44 continues to apply filter 42.

Detection that $P_1/P_2$ has exceeded the threshold at step 64 is taken as an indication that the user of device 20 has begun to speak. In this case, selection logic 44 switches to filter 43, at an own-voice suppression step 66. Optionally, to avoid rapid toggling between filters 42 and 43, which may be disturbing to the user, selection logic 44 applies a time lag in applying and removing the beamforming filter after detecting that the user has begun or ceased to speak. For this purpose, for example, the selection logic may apply a smoothing filter to the power values:

$$\overline{P_n^t} = \alpha \overline{P_n^{t-1}} + (1-\alpha)P_n^t$$

In this expression, $P_n^t$ is the measured value of $P_1$ or $P_2$ at time t, and the filter coefficient $\alpha$ has a value between zero and one. Selection logic 44 uses the ratio $\overline{P_1^t}/\overline{P_2^t}$

in deciding when to change the filtering mode.

Additionally or alternatively, upon detecting that the user has begun to speak (or has subsequently ceased to speak), processing circuitry 26 may blend beamforming filters 42 and 43 during a transition period to avoid sharp changes in the acoustic output to speaker 28. For this purpose, the processing circuitry blends the filter coefficients using a blend factor β, which varies gradually over time between zero and one. During the transition period, the vector of filter coefficients F applied by processing circuitry 26 is a linear combination of the respective coefficient vectors $F_1$ and $F_2$ of filters 42 and 43: $F = (1-\beta)F_1 + \beta F_2$. The value of β may be computed, for example, using the following algorithm in a series of incremental steps over time, using small values γ and ε between zero and one:

> If $P_1/P_2$ > threshold, β = β+γ, else β = β-ε.
> If β>1, β=1.
> If β<0, β=0.

Returning to Fig. 3, while processing circuitry 26 applies own-voice suppression using filter 43 at step 66, selection logic 44 continues to check the ratio $P_1/P_2$, at a further power comparison step 68. As long as the ratio remains above the threshold, processing circuitry 26 continues to apply own-voice suppression at step 66. When the ratio drops below the threshold, however, selection logic 44 switches back to beamforming filter 42, at an own-voice suppression deactivation step 70. The same time lag and blending procedures that were described above may be applied in step 70, as well, *mutatis mutandis*. Operation of device 20 continues at step 62 until further changes are detected.

## Claims

1.  A system (20) for hearing assistance, comprising:

    an array of microphones (23, 24), which are configured to be mounted in proximity to a head of a user of the system and to output electrical signals in response to first acoustic waves that are incident on the microphones;
    a speaker (28), which is configured for mounting in proximity to an ear of the user and configured to output second acoustic waves in response to a drive signal applied to the speaker; and
    processing circuitry (26), which is configured to generate the drive signal by amplifying and filtering the electrical signals using a beamforming filter (43) that emphasizes first sounds that impinge on the array of microphones within a selected angular range while suppressing second sounds that are spoken by the user,
    wherein, in generating the drive signal, the processing circuitry is configured to detect that the user is speaking and to apply the beamforming filter to suppress the second sounds responsively to detecting that the user is speaking, wherein the beamforming filter that suppresses the second sounds is a first beamforming filter (43), and wherein the processing circuitry is configured to apply a second beamforming filter (42), which emphasizes the first sounds without suppressing the second sounds, as long as the user is not speaking, and to apply the first beamforming filter upon detecting that the user is speaking,

**characterized in that**

the processing circuitry is configured to detect that the user is speaking by applying both the first and the second beamforming filters to the electrical signals and comparing respective power levels output by the first and second beamforming filters.

2. The system according to claim 1, wherein the processing circuitry is configured, upon detecting that the user has begun or ceased to speak, to generate the drive signal by blending the first and second beamforming filters during a transition period.

3. The system according to claim 1, wherein the processing circuitry is configured to apply a time lag in applying and removing the beamforming filter after detecting that the user has begun or ceased to speak.

4. The system according to any of claims 1-3, wherein the beamforming filter comprises a minimum variance distortionless response (MVDR) beamformer.

5. The system according to any of claims 1-3, wherein the beamforming filter comprises a linearly constrained minimum variance (LCMV) beamformer.

6. The system according to any of claims 1-3, and comprising a frame configured for mounting on the head, wherein the microphones and the speaker are mounted at respective locations on the frame.

7. The system according to claim 6, wherein the frame comprises a spectacle frame.

8. A method for hearing assistance, comprising:

mounting in proximity to a head of a user an array of microphones (23, 24), which output electrical signals in response to first acoustic waves that are incident on the microphones; mounting in proximity to an ear of the user a speaker (28), which outputs second acoustic waves in response to a drive signal applied to the speaker; and

generating the drive signal by amplifying and filtering the electrical signals using a beamforming filter (43) that emphasizes first sounds that impinge on the array of microphones within a selected angular range while suppressing second sounds that are spoken by the user, wherein generating the drive signal comprises detecting that the user is speaking and applying the beamforming filter to suppress the second sounds responsively to detecting that the user is speaking, wherein the beamforming filter that suppresses the second sounds is a first beamforming filter (43), and wherein generating the drive signal comprises filtering the electrical signals using a second beamforming filter (42), which emphasizes the first sounds without suppressing the second sounds, as long as the user is not speaking, and applying the first beamforming filter upon detecting that the user is speaking, and wherein detecting that the user is speaking comprises applying both the first and the second beamforming filters to the electrical signals and comparing (64, 68) respective power levels output by the first and second beamforming filters.

9. The method according to claim 8, wherein generating the drive signal comprises applying a time lag in applying and removing the beamforming filter after detecting that the user has begun or ceased to speak.

**Patentansprüche**

1. System (20) zur Hörunterstützung, umfassend:

ein Array von Mikrofonen (23, 24), die dazu konfiguriert sind, in der Nähe eines Kopfes eines Benutzers des Systems angebracht zu werden und elektrische Signale als Reaktion auf erste akustische Wellen auszugeben, die auf die Mikrofone auftreffen; einen Lautsprecher (28), der dazu konfiguriert ist, in der Nähe eines Ohres des Benutzers angebracht zu werden, und dazu konfiguriert ist, zweite akustische Wellen als Reaktion auf ein Treibersignal auszugeben, das an den Lautsprecher angelegt wird; und eine Verarbeitungsschaltung (26), die dazu konfiguriert ist, das Treibersignal zu erzeugen, indem die elektrischen Signale unter Verwendung eines Strahlformungsfilters (43) verstärkt und gefiltert werden, der erste Töne hervorhebt, die auf das Array von Mikrofonen innerhalb eines ausgewählten Winkelbereichs auftreffen, während zweite Töne unterdrückt werden, die von dem Benutzer gesprochen werden, wobei die Verarbeitungsschaltung beim Erzeugen des Treibersignals dazu konfiguriert ist, zu erkennen, dass der Benutzer spricht, und den Strahlformungsfilter dazu anzuwenden, die zweiten Töne als Reaktion darauf zu unterdrücken, das erkannt wird, dass der Benutzer spricht,

wobei der Strahlformungsfilter, der die zweiten Töne unterdrückt, ein erster Strahlformungsfilter (43) ist, und wobei die Verarbeitungsschaltung dazu konfiguriert ist, einen zweiten Strahlformungsfilter (42) anzuwenden, der die ersten Töne hervorhebt, ohne die zweiten Töne zu unterdrücken, solange der Benutzer nicht spricht, und den ersten Strahlformungsfilter anzuwenden, wenn erkannt wird, dass der Benutzer spricht,

**dadurch gekennzeichnet, dass**

die Verarbeitungsschaltung dazu konfiguriert ist, zu erkennen, dass der Benutzer spricht, indem sowohl der erste als auch der zweite Strahlformungsfilter auf die elektrischen Signale angewendet wird, und indem jeweilige Leistungspegel verglichen werden, die von dem ersten und dem zweiten Strahlformungsfilter ausgegeben werden.

2. System nach Anspruch 1, wobei die Verarbeitungsschaltung dazu konfiguriert ist, wenn erkannt wird, dass der Benutzer begonnen oder aufgehört hat zu sprechen, das Treibersignal zu erzeugen, indem der erste und der zweite Strahlformungsfilter während eines Übergangszeitraums gemischt werden.

3. System nach Anspruch 1, wobei die Verarbeitungsschaltung dazu konfiguriert ist, nachdem erkannt wurde, dass der Benutzer begonnen oder aufgehört hat zu sprechen, beim Anwenden und Entfernen des Strahlformungsfilters eine Zeitverzögerung einzusetzen.

4. System nach einem der Ansprüche 1 bis 3, wobei der Strahlformungsfilter einen Strahlformer mit minimalvarianz-verzerrungsfreier Antwort (MVDR-Strahlformer) umfasst.

5. System nach einem der Ansprüche 1 bis 3, wobei der Strahlformungsfilter einen Strahlformer mit linear beschränkter minimaler Varianz (LCMV-Strahlformer) umfasst.

6. System nach einem der Ansprüche 1 bis 3, und umfassend ein Gestell, das dazu konfiguriert ist, um an dem Kopf angebracht zu werden, wobei die Mikrofone und der Lautsprecher an jeweiligen Stellen an dem Gestell angebracht sind.

7. System nach Anspruch 6, wobei das Gestell ein Brillengestell umfasst.

8. Verfahren zur Hörunterstützung, umfassend:

Anbringen, in der Nähe eines Kopfes eines Benutzers, eines Arrays von Mikrofonen (23, 24), die elektrische Signale als Reaktion auf erste akustische Wellen ausgeben, die auf die Mikrofone auftreffen;

Anbringen, in der Nähe eines Ohres des Benutzers, eines Lautsprechers (28), der zweite akustische Wellen als Reaktion auf ein Treibersignal ausgibt, das an den Lautsprecher angelegt wird; und

Erzeugen des Treibersignals, indem die elektrischen Signale unter Verwendung eines Strahlformungsfilters (43) verstärkt und gefiltert werden, der erste Töne hervorhebt, die auf das Array von Mikrofonen innerhalb eines ausgewählten Winkelbereichs auftreffen, während zweite Töne unterdrückt werden, die von dem Benutzer gesprochen werden,

wobei das Erzeugen des Treibersignals ein Erkennen, dass der Benutzer spricht, und ein Anwenden des Strahlformungsfilters umfasst, um die zweiten Töne als Reaktion auf das Erkennen zu unterdrücken, dass der Benutzer spricht,

wobei der Strahlformungsfilter, der die zweiten Töne unterdrückt, ein erster Strahlformungsfilter (43) ist, und wobei das Erzeugen des Treibersignals ein Filtern der elektrischen Signale unter Verwendung eines zweiten Strahlformungsfilters (42), der die ersten Töne hervorhebt, ohne die zweiten Töne zu unterdrücken, solange der Benutzer nicht spricht, und ein Anwenden des ersten Strahlformungsfilters umfasst, wenn erkannt wird, dass der Benutzer spricht,

wobei das Erkennen, dass der Benutzer spricht, ein Anwenden sowohl des ersten als auch des zweiten Strahlformungsfilters auf die elektrischen Signale und ein Vergleichen (64, 68) von jeweiligen Leistungspegeln umfasst, die von dem ersten und dem zweiten Strahlformungsfilter ausgegeben werden.

9. Verfahren nach Anspruch 8, wobei das Erzeugen des Treibersignals ein Einsetzen einer Zeitverzögerung beim Anwenden und Entfernen des Strahlformungsfilters umfasst, nachdem erkannt wurde, dass der Benutzer begonnen oder aufgehört hat zu sprechen.

**Revendications**

1. Système (20) d'assistance auditive comprenant :

un réseau de microphones (23, 24), configurés pour être montés à proximité d'une tête d'un utilisateur du système et pour émettre des signaux électriques en réponse à des premières ondes acoustiques incidentes sur les microphones ;

un haut-parleur (28), qui est configuré pour être monté à proximité d'une oreille de l'utilisateur et configuré pour émettre des deuxièmes ondes acoustiques en réponse à un signal de commande appliqué au haut-parleur ; et

une circuiterie de traitement (26), configurée pour générer le signal de commande en amplifiant et filtrant les signaux électriques en utilisant un filtre de formation de faisceau (43) qui accentue des premiers sons qui heurtent le réseau de microphones dans une plage angulaire sélectionnée tout en supprimant des deuxièmes sons qui sont prononcés par l'utilisateur,

dans lequel, lors de la génération du signal de commande, la circuiterie de traitement est configurée pour détecter que l'utilisateur parle et pour appliquer le filtre de formation de faisceau pour supprimer les deuxièmes sons en réponse à la détection que l'utilisateur parle,

dans lequel le filtre de formation de faisceau qui supprime les deuxièmes sons est un premier filtre de formation de faisceau (43), et la circuiterie de traitement étant configurée pour appliquer un deuxième filtre de formation de faisceau (42), lequel accentue les premiers sons sans supprimer les deuxièmes sons, tant que l'utilisateur ne parle pas, et pour appliquer le premier filtre de formation de faisceau lors de la détection du fait que l'utilisateur parle,

**caractérisé en ce que**

la circuiterie de traitement est configurée pour détecter que l'utilisateur parle en appliquant les premier et deuxième filtres de formation de faisceau aux signaux électriques et en comparant des niveaux de puissance respectifs délivrés par les premier et deuxième filtres de formation de faisceau.

2. Système selon la revendication 1, dans lequel la circuiterie de traitement est configurée, lors de la détection que l'utilisateur a commencé ou cessé de parler, pour générer le signal de commande en mélangeant les premier et deuxième filtres de formation de faisceau pendant une période de transition.

3. Système selon la revendication 1, dans lequel la circuiterie de traitement est configurée pour appliquer un temps de décalage dans l'application et le retrait du filtre de formation de faisceau après la détection du fait que l'utilisateur a commencé ou cessé de parler.

4. Système selon l'une quelconque des revendications 1 à 3, dans lequel le filtre de formation de faisceau comprend un formeur de faisceau à réponse sans distorsion à variance minimale (MVDR).

5. Système selon l'une quelconque des revendications 1 à 3, dans lequel le filtre de formation de faisceau comprend un formeur de faisceau à variance minimale à contrainte linéaire (LCMV).

6. Système selon l'une quelconque des revendications 1 à 3, et comprenant une monture configurée pour être montée sur la tête, dans lequel les microphones et le haut-parleur étant montés à des emplacements respectifs sur la monture.

7. Système selon la revendication 6, dans lequel la monture comprend une monture de lunettes.

8. Procédé d'assistance auditive, comprenant :

le montage à proximité d'une tête d'un utilisateur d'un réseau de microphones (23, 24) délivrant des signaux électriques en réponse à des premières ondes acoustiques incidentes sur les microphones ;

le montage à proximité d'une oreille de l'utilisateur d'un haut-parleur (28), lequel délivre des deuxièmes ondes acoustiques en réponse à un signal de commande appliqué au haut-parleur ; et

la génération du signal de commande en amplifiant et filtrant les signaux électriques en utilisant un filtre de formation de faisceau (43) qui accentue des premiers sons qui heurtent le réseau de microphones dans une plage angulaire sélectionnée tout en supprimant des deuxièmes sons qui sont prononcés par l'utilisateur,

dans lequel la génération du signal de commande comprend la détection que l'utilisateur parle et l'application du filtre de formation de faisceau pour supprimer les deuxièmes sons en réponse à la détection que l'utilisateur parle,

dans lequel le filtre de formation de faisceau qui supprime les deuxièmes sons est un premier filtre de formation de faisceau (43), et dans lequel la génération du signal de commande comprend le filtrage des signaux électriques en utilisant un deuxième filtre de formation de faisceau (42), qui accentue les premiers sons sans supprimer les deuxièmes sons, tant que l'utilisateur ne parle pas, et l'application du premier filtre de formation de faisceau lors de la détection que l'utilisateur parle, et

dans lequel la détection que l'utilisateur parle comprend l'application à la fois du premier et du deuxième filtre de formation de faisceau aux signaux électriques et la comparaison (64, 68) de niveaux de puissance respectifs délivrés par les premier et deuxième filtres de formation de faisceau.

9. Procédé selon la revendication 8, dans lequel la génération du signal de commande comprend l'application d'un temps de décalage dans l'application et le retrait du filtre de formation de faisceau après la détection du fait que l'utilisateur a commencé ou cessé de parler.

FIG. 1

FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017158507 A
- WO 2021074818 A
- US 2019394586 A1
- US 2021345047 A1
- CA 2297344 A1
- US 10567888 B